# EUROPÄISCHE PATENTSCHRIFT

(11) **EP 1 058 975 B1**
(45) Veröffentlichungstag und Bekanntmachung des Hinweises auf die Patenterteilung: **20.08.2003**
(21) Anmeldenummer: 99910309.6
(22) Anmeldetag: 01.03.1999
(51) Int. Cl.: H04B 7/26

(54) **TDD-TELEKOMMUNIKATIONSSYSTEME MIT DRAHTLOSER, AUF CODE- UND ZEITMULTIPLEX BASIERENDER TELEKOMMUNIKATION**
TDD TELECOMMUNICATIONS SYSTEMS WITH WIRELESS TELECOMMUNICATION BASED ON CODE AND TIME-DIVISION MULTIPLEX
SYSTEMES DE TELECOMMUNICATION DRT A TELECOMMUNICATION SANS FIL FONDEE SUR LE CODE ET LE MULTIPLEXAGE DANS LE TEMPS

(30) Priorität: 27.02.1998 EP 98103521
(43) Veröffentlichungstag der Anmeldung: 13.12.2000
(73) Patentinhaber: SIEMENS AKTIENGESELLSCHAFT, 80333 München (DE)
(72) Erfinder: KAMPERSCHROER, Erich, D-46499 Hamminkeln (DE); SCHWARK, Uwe, D-46399 Bocholt (DE)
(86) Internationale Anmeldenummer: EP9901320
(87) Internationale Veröffentlichungsnummer: WO99044315

(56) Entgegenhaltungen:
- KLEIN A ET AL: "FRAMES multiple access mode 1-wideband TDMA with and without spreading" WAVES OF THE YEAR 2000+ PIMRC. THE IEEE INTERNATIONAL SYMPOSIUM ON PERSONAL, INDOOR AND MOBILE RADIO COMMUNICATIONS. TECHNICAL PROGRAM, Bd. 1, 1. Januar 1997, Seiten 37-41, XP002094062
- OWEN F C: "THE DECT RADIO INTERFACE" IEE COLLOQUIUM ON CT2/CAI AND DECT CORDLESS TELECOMMUNICATIONS, 27. November 1990, Seiten 7/1-7/06, XP000199462
- OJANPER ET AL: "FRAMES-hybrid multiple access technology" IEEE ISSSTA. IEEE INTERNATIONAL SYMPOSIUM ON SPREAD SPECTRUM TECHNIQUES AND APPLICATIONS, Nr. 1, 22. September 1996, Seite 320 324 XP002077020

## Beschreibung

Telekommunikationssysteme mit drahtloser Telekommunikation zwischen mobilen und/oder stationären Sende-/Empfangsgeräten sind spezielle Nachrichtensysteme mit einer Nachrichtenübertragungsstrecke zwischen einer Nachrichtenquelle und einer Nachrichtensenke, bei denen beispielsweise Basisstationen und Mobilteile zur Nachrichtenverarbeitung und -übertragung als Sende- und Empfangsgeräte verwendet werden und bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung vorzugsweise digital ist,
3) die Nachrichtenübertragung über die Fernübertragungsstrecke drahtlos auf der Basis von diversen Nachrichtenübertragungsverfahren zur Mehrfachausnutzung der Nachrichtenübertragungsstrecke FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie **DECT** [**D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Selten 23 bis 29* **in Verbindung mit** der ETSI-Publikation *ETS 300175-1...9, Oktober 1992* und der DECT-Publikation des *DECT-Forum, Februar 1997, Seiten* 1 *bis 16*], **GSM** [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze", Selten 137 bis 152 in* **Verbindung mit** der Publikation *telekom praxis 4 1993, P.Smolka "GSM-Funkschnittstelle - Elemente und Funktionen",* *Seiten 17 bis 24*],
**UMTS** [**U**niversal **M**obile **T**elecommunication **S**ystem; vgl. **(1) :** *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration";* **(2) :** *Nachrichtentechnik Elektronik, Berlin 41, 1991, Heft 6, Seiten 223 bis 227 und Seite 234; P.W.Baier, P. Jung, A.Klein: "CDMA - ein günstiges Vielfachzugriffsverfahren für frequenzselektive und zeitvariante Mobilfunkkanäle";* **(3):** *IEICE Transactions on Fundamentals of Electonics, Communications and Computer Sciences, Vol. E79-A, No. 12, December 1996, Seiten 1930 bis 1937; P.W.Baier, P.Jung: "CDMA Myths and Realities Revisited";* **(4):** *IEEE Personal Communications, February 1995, Seiten 38 bis 47; A.Urie, M.Streeton, C.Mourot: "An Advanced TDMA Mobile Access System for UMTS";* **(5):** telekom *praxis, 5*/*1995, Seiten 9 bis 14; P.W.Baier: "Spread-Spectrum-Techhik und CDMA - eine ursprünglich militärische Technik erobert den zivilen Bereich";* **(6):** *IEEE Personal Communications, February 1995, Seiten 48 bis 53; P.G.Andermo, L.M.Ewerbring: "An CDMA-Based Radio Access Design for UMTS";* **(7):** *ITG Fachberichte 124 (1993), Berlin, Offenbach: VDE Verlag ISBN 3-8007-1965-7, Seiten 67 bis 75; Dr. T.Zimmermann, Siemens AG: "Anwendung von CDMA in der Mobilkommunikation";* **(8):** *telcom report 16, (1993), Heft 1, Seiten 38 bis 41; Dr. T. Ketseoglou, Siemens AG und Dr. T.Zimmermann, Siemens AG: "Effizienter Teilnehmerzugriff für die 3. Generation der Mobilkommunikation - Vielfachzugriffsverfahren CDMA macht Luftschnittstelle flexibler";* **(9):** *Funkschau 6*/*98: R.Sietmann "Ringen um die UMTS-Schnittstelle", Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"] erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Die nachfolgenden FIGUREN 1 bis 7 zeigen:
FIGUR 1 "Drei-Ebenen-Struktur" einer WCDMA/FDD-Luftschnittstelle im "Downlink",
FIGUR 2 "Drei-Ebenen-Struktur" einer WCDMA/FDD-Luftschnittstelle im "Uplink",
FIGUR 3 "Drei-Ebenen-Struktur" einer TDCDMA/TDD-Luftschnittstelle,
FIGUR 4 Funkszenario mit Kanal-Mehrfachausnutzung nach dem Frequenz-,/Zeit-,/Codemultiplex,
FIGUR 5 den prinzipiellen Aufbau einer als Sende-/Empfangsgerät ausgebildeten Basisstation,
FIGUR 6 den prinzipiellen Aufbau einer ebenfalls als Sende-/Empfangsgerät ausgebildeten Mobilstation,
FIGUR 7 einen DECT-Übertragungszeitrahmen.

Im UMTS-Szenario (3. Mobilfunkgeneration bzw. IMT-2000) gibt es z.B. gemäß der Druckschrift *Funkschau 6*/*98: R.Sietmann "Ringen um die UMTS-Schnittstelle", Seiten 76 bis 81* zwei Teilszenarien. In einem ersten Teilszenario wird der lizensierte koordinierte Mobilfunk auf einer WCDMA-Technologie (**W**ideband **C**ode **D**ivision **M**ultiple **A**ccess) basieren und, wie bei GSM, im FDD-Modus (**F**requency **D**ivision **D**uplex) betrieben, während in einem zweiten Teilszenario der unlizensierte unkoordinierte Mobilfunk auf einer TD-CDMA-Technologie (**T**ime **D**ivision-**C**ode **D**ivision **M**ultiple **A**ccess) basieren und, wie bei DECT, im TDD-Modus (**F**requency **D**ivision **D**uplex) betrieben wird.

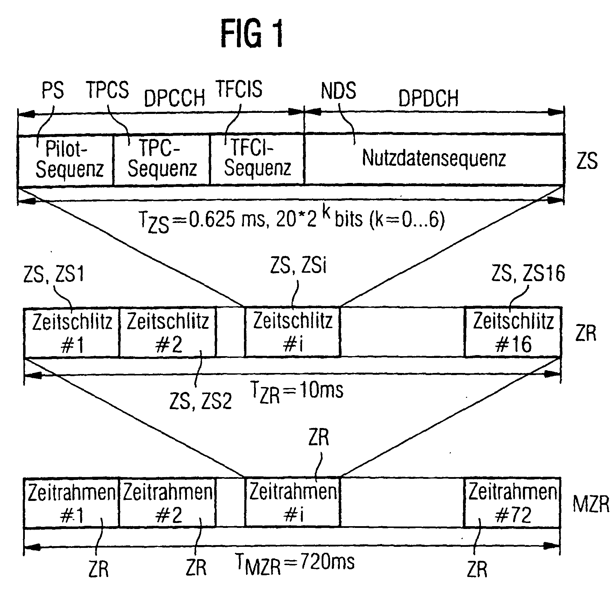

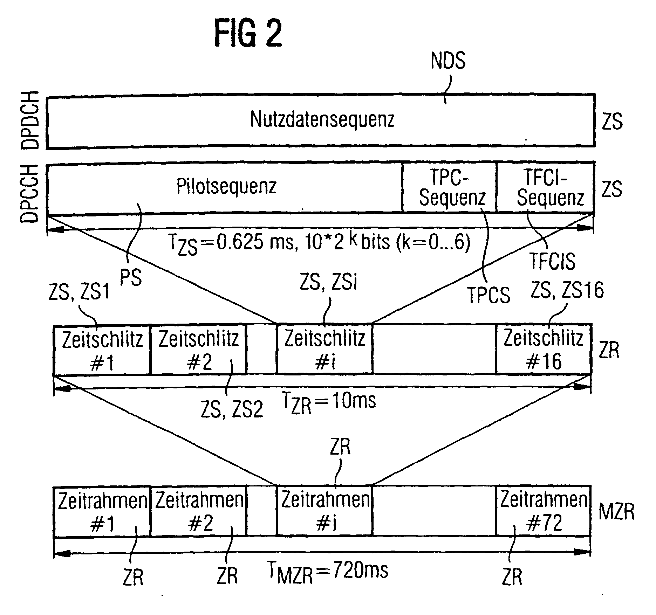

Für den WCDMA/FDD-Betrieb des Universal-Mobil-Telekommunikation-Systems enthält die Luftschnittstelle des Telekommunikationsystems in Auf- und Abwärtsrichtung der Telekommunikation gemäß der Druckschrift *ETSI STC SMG2 UMTS-L1*, *Tdoc SMG2 UMTS-L1 163*/*98: "UTRA Physical Layer Description FDD Parts" Vers. 0.3, 1998-05-29* jeweils mehrere physikalische Kanäle, von denen ein erster physikalischer Kanal, der sogenannte **D**edicated **P**hysical **C**ontrol **CH**annel DPCCH, und ein zweiter physikalischer Kanal, der sogenannte **D**edicated **P**hysical **D**ata **CH**annel DPDCH, in bezug auf eine "Drei-Ebenen-Struktur" (three-layerstructure), bestehend aus 720 ms lange (T_{MZR}=720 ms) Multizeitrahmen (super frame) MZR, 10 ms lange (T_{FZR}=10 ms) Zeitrahmen (radio frame) ZR und 0,625 ms lange (T_{ZS}=0,625 ms) Zeitschlitzen (timeslot) ZS , die in den FIGUREN 1 und 2 dargestellt sind. Der jeweilige Multizeitrahmen MZR enthält z.B. 72 Zeitrahmen ZR, während jeder Zeitrahmen ZR z.B. wiederum 16 Zeitschlitze ZS1...ZS16 aufweist. Der einzelne Zeitschlitz ZS, ZS1...2S16 (Burst) weist bezüglich des ersten physikalischen Kanals DPCCH als Burststruktur eine Pilot-Sequenz PS mit Nₚᵢₗₒₜ Bits zur Kanalschätzung, eine TPC-Sequenz TPCS mit N_{TPC}-Bits zur Leistungsregelung (Traffic Power Control) und eine TFCI-Sequenz TFCIS mit N_{TFCI}-Bits zur Transportformatangabe (Traffic Format Channel Indication) sowie bezüglich des zweiten physikalischen Kanals DPDCH eine Nutzdatensequenz NDS mit N_{Data}-Bits auf.

Im "Downlink" (Abwärtsrichtung der Telekommunikation; Funkverbindung von der Basisstation zur Mobilstation) des WCDMA/FDD Systems von ETSI bzw. ARIB - FIGUR 1 - werden der erste physikalische Kanal ["Dedicated Physical Control Channel (DPCCH)] und der zweite physikalische Kanal ["Dedicated Physical Data Channel (DPDCH)] zeitlich gemultiplext, während im "Uplink" (Aufwärtsrichtung der Telekommunikation; Funkverbindung von der Mobilstation zur Basisstation) - FIGUR 2 - ein I/Q-Multiplex stattfindet, bei dem der zweite physikalische Kanal DPDCH im I-Kanal und der erste physikalische Kanal DPCCH im Q-Kanal übertragen werden.

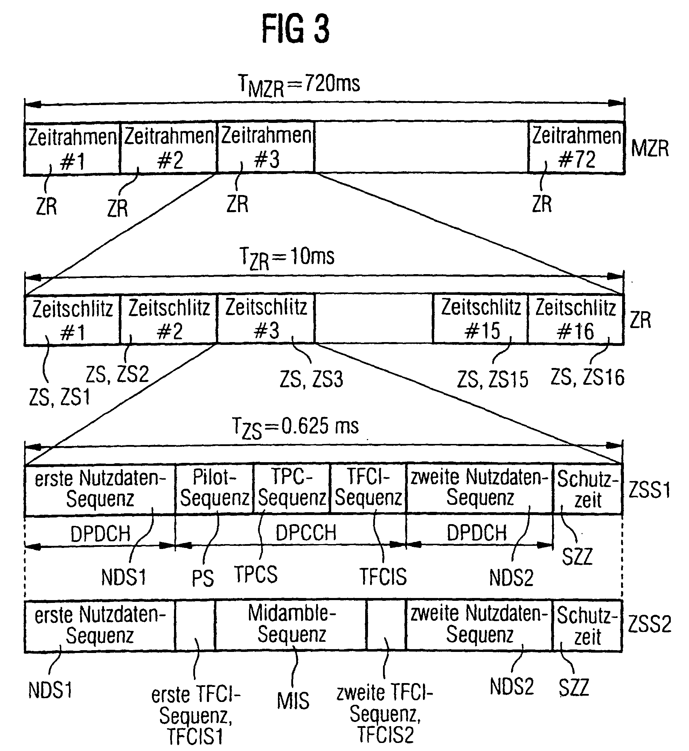

Für den TDCDMA/TDD-Betrieb des Universal-Mobil-Telekommunikation-Systems basiert die Luftschnittstelle des Telekonununikationsystems in Auf- und Abwärtsrichtung der Telekommunikation gemäß der Druckschrift *TSG RAN WG1 (S1.21): "3*^{*rd*} *Generation Partnership Project (3GPP)" Vers. 0.0.1, 1999-01* wiederum auf die "Drei-Ebenen-Struktur", bestehend aus den Multizeitrahmen MZR, den Zeitrahmen ZR und den Zeitschlitzen ZS, für sämtliche physikalischen Kanäle, die in FIGUR 3 dargestellt ist. Der jeweilige Multizeitrahmen MZR enthält wiederum z.B. 72 Zeitrahmen ZR, während jeder Zeitrahmen ZR z.B. wiederum die 16 Zeitschlitze ZS1...ZS16 aufweist. Der einzelne Zeitschlitz ZS, ZS1...ZS16 (Burst) weist entweder gemäß dem ARIB-Vorschlag eine erste Zeitschlitzstruktur (Burststruktur) ZSS1, in der Reihenfolge bestehend aus einer ersten Nutzdatensequenz NDS1 mit N_{Data1}-Bits, der Pilot-Sequenz PS mit Nₚᵢₗₒₜ Bits zur Kanalschätzung, der TPC-Sequenz TPCS mit N_{TPC}-Bits zur Leistungsregelung, der TFCI-Sequenz TFCIS mit N_{TFCI}-Bits zur Transportformatangabe, einer zweiten Nutzdatensequenz NDS2 und einer Schutzzeitzone SZZ (guard period) mit N_{Guard}-Bits, oder gemäß dem ETSI-Vorschlag eine zweite Zeitschlitzstruktur (Burststruktur) ZSS2, in der Reihenfolge bestehend aus der ersten Nutzdatensequenz NDS1, einer ersten TFCI-Sequenz TFCIS1, einer Midamble-Sequenz MIS zur Kanalschätzung, einer zweiten TFCI-Sequenz TFCIS2, der zweiten Nutzdatensequenz NDS2 und der Schutzzeitzone SZZ auf.

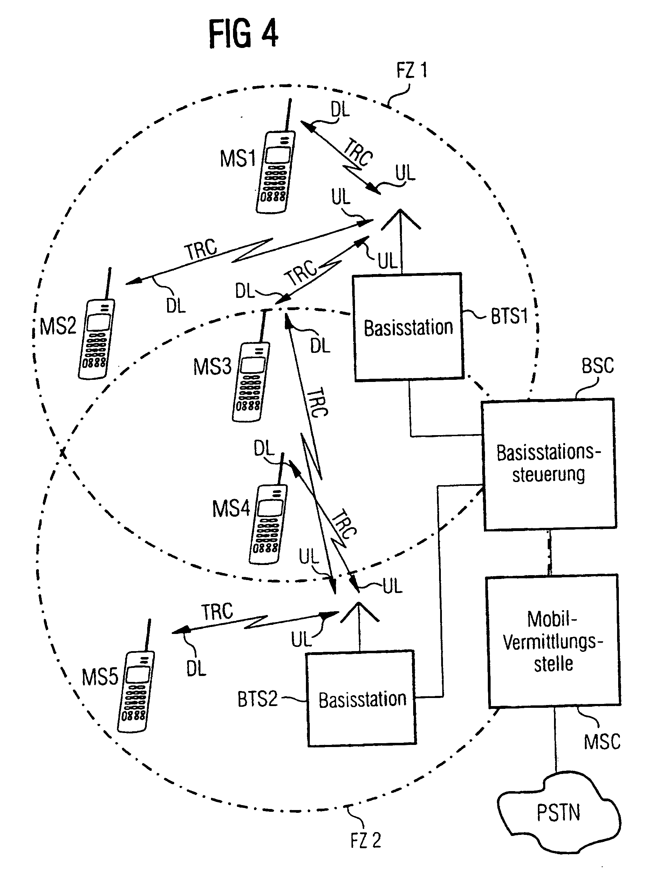

FIGUR 4 zeigt z.B. auf der Basis eines GSM-Funkszenarios mit z.B. zwei Funkzellen und darin angeordneten Basisstationen (**B**ase **T**ransceiver **S**tation), wobei eine erste Basisstation BTS1 (Sender/Empfänger) eine erste Funkzelle FZ1 und eine zweite Basisstation BTS2 (Sende-/Empfangsgerät) eine zweite Funkzelle FZ2 omnidirektional "ausleuchtet", und ausgehend von den FIGUREN 1 und 2 ein Funkszenario mit Kanal-Mehrfachausnutzung nach dem Frequenz-/Zeit-/Codemultiplex, bei dem die Basisstationen BTS1, BTS2 über eine für das Funkszenario ausgelegte Luftschnittstelle mit mehreren in den Funkzellen FZ1, FZ2 befindlichen Mobilstationen MS1...MS5 (Sende-/Empfangsgerät) durch drahtlose uni- oder bidirektionale - Aufwärtsrichtung UL (Up Link) und/oder Abwärtsrichtung DL (Down Link) - Telekommunikation auf entsprechende Übertragungkanäle TRC (Transmission Channel) verbunden bzw. verbindbar sind. Die Basisstationen BTS1, BTS2 sind in bekannter Weise (vgl. GSM-Telekommunikationssystem) mit einer Basisstationssteuerung BSC (**B**ase **S**tation **C**ontroller) verbunden, die im Rahmen der Steuerung der Basisstationen die Frequenzverwaltung und Vermittlungsfunktionen übernimmt. Die Basisstationssteuerung BSC ist ihrerseits über eine Mobil-Vermittlungsstelle MSC (**M**obile **S**witching **C**enter) mit dem übergeordneten Telekommunikationsnetz, z.B. dem PSTN (Public Switched Telecommunication Network), verbunden. Die Mobil-Vermittlungsstelle MSC ist die Verwaltungszentrale für das dargestellte Telekommunikationssystem. Sie übernimmt die komplette Anrufverwaltung und mit angegliederten Registern (nicht dargestellt) die Authentisierung der Telekommunikationsteilnehmer sowie die Ortsüberwachung im Netzwerk.

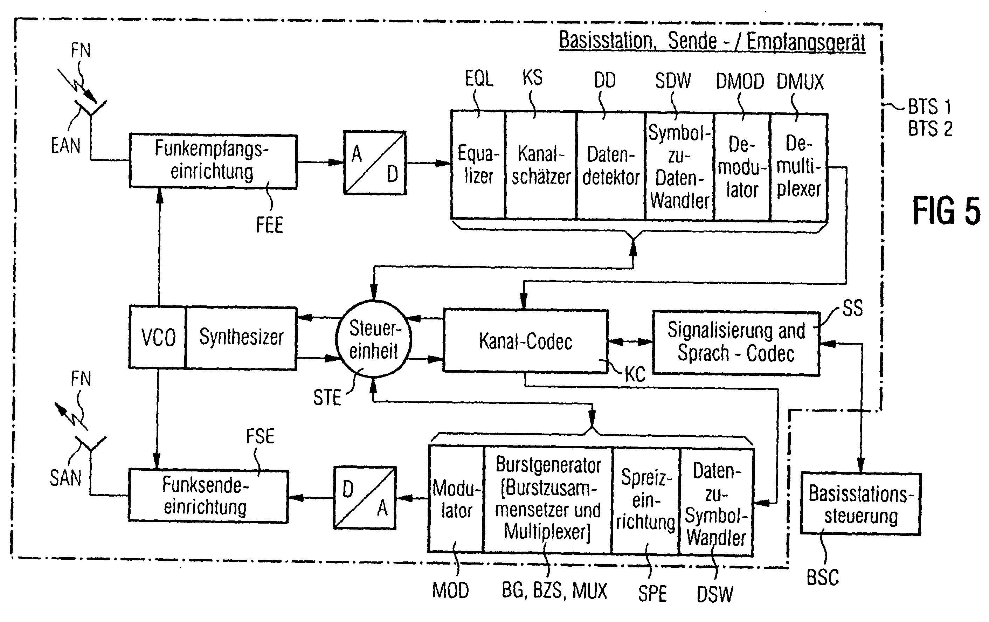

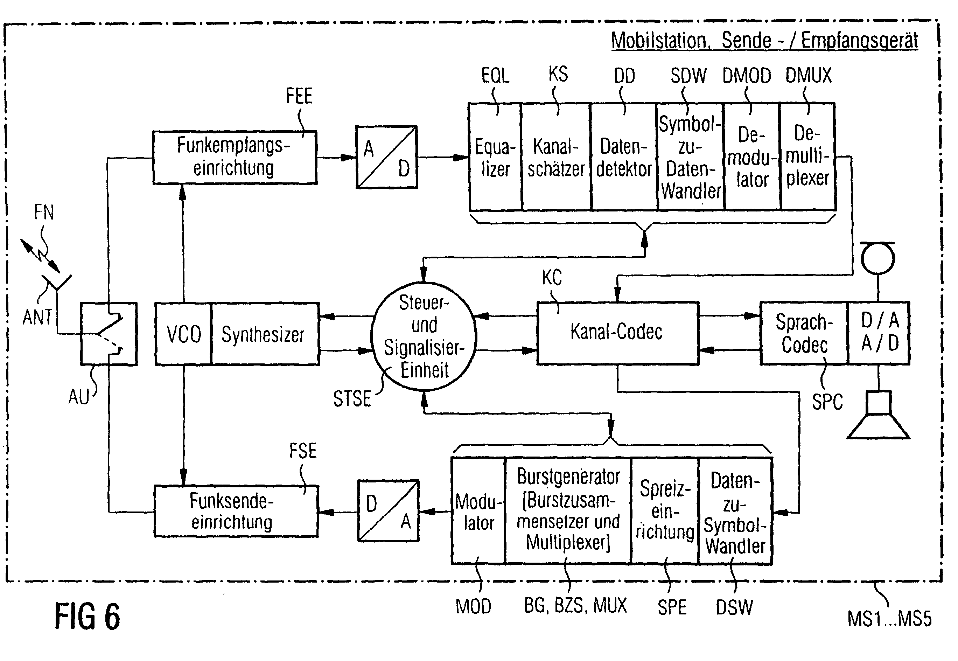

FIGUR 5 zeigt den prinzipiellen Aufbau der als Sende-/Empfangsgerät ausgebildeten Basisstation BTS1, BTS2, während FIGUR 6 den prinzipiellen Aufbau der ebenfalls als Sende-/Empfangsgerät ausgebildeten Mobilstation MS1...MS5 zeigt. Die Basisstation BTS1, BTS2 übernimmt das Senden und Empfangen von Funknachrichten von und zur Mobilstation MS1..MS5, während die Mobilstation MS1...MS5 das Senden und Empfangen von Funknachrichten von und zur Basisstation BTS1, BTS2 übernimmt. Hierzu weist die Basisstation eine Sendeantenne SAN und eine Empfangsantenne EAN auf, während die Mobilstation MS1...MS5 eine durch eine Antennenumschaltung AU steuerbare für das Senden und Empfangen gemeinsame Antenne ANT aufweist. In der Aufwärtsrichtung (Empfangspfad) empfängt die Basisstation BTS1, BTS2 über die Empfangsantenne EAN beispielsweise mindestens eine Funknachricht FN mit einer Frequenz-/Zeit-/Code-Komponente von mindestens einer der Mobilstationen MS1...MS5, während die Mobilstation MS1...MS5 in der Abwärtsrichtung (Empfangspfad) über die gemeinsame Antenne ANT beispielsweise mindestens eine Funknachricht FN mit einer Frequenz-/Zeit-/Code-Komponente von mindestens einer Basisstation BTS1, BTS2 empfängt. Die Funknachricht FN besteht dabei aus einem breitbandig gespreizten Trägersignal mit einer aufmodulierten aus Datensymbolen zusammengesetzten Information.

In einer Funkempfangseinrichtung FEE (Empfänger) wird das empfangene Trägersignal gefiltert und auf eine Zwischenfrequenz heruntergemischt, die ihrerseits im weiteren abgetastet und quantisiert wird. Nach einer Analog/Digital-Wandlung wird das Signal, das auf dem Funkweg durch Mehrwegeausbreitung verzerrt worden ist, einem Equalizer EQL zugeführt, der die Verzerrungen zu einem großen Teil ausgleicht (Stw.: Synchronisation).

Anschließend wird in einem Kanalschätzer KS versucht die Übertragungseigenschaften des Übertragungskanals TRC auf dem die Funknachricht FN übertragen worden ist, zu schätzen. Die Übertragungseigenschaften des Kanals sind dabei im Zeitbereich durch die Kanalimpulsantwort angegeben. Damit die Kanalimpulsantwort geschätzt werden kann, wird der Funknachricht FN sendeseitig (im vorliegenden Fall von der Mobilstation MS1...MS5 bzw. der Basisstation BTS1, BTS2) eine spezielle, als Trainingsinformationssequenz ausgebildete Zusatzinformation in Form einer sogenannten Midambel zugewiesen bzw. zugeordnet.

In einem daran anschließenden für alle empfangenen Signale gemeinsamen Datendetektor DD werden die in dem gemeinsamen Signal enthaltenen einzelnen mobilstationsspezifischen Signalanteile in bekannter Weise entzerrt und separiert. Nach der Entzerrung und Separierung werden in einem Symbol-zu-Daten-Wandler SDW die bisher vorliegenden Datensymbole in binäre Daten umgewandelt. Danach wird in einem Demodulator DMOD aus der Zwischenfrequenz der ursprüngliche Bitstrom gewonnen, bevor in einem Demultiplexer DMUX die einzelnen Zeitschlitze den richtigen logischen Kanälen und damit auch den unterschiedlichen Mobilstationen zugeordnet werden.

In einem Kanal-Codec KC wird die erhaltene Bitsequenz kanalweise decodiert. Je nach Kanal werden die Bitinformationen dem Kontroll- und Signalisierungszeitschlitz oder einem Sprachzeitschlitz zugewiesen und - im Fall der Basisstation (FIGUR 5) - die Kontroll- und Signalisierungsdaten und die Sprachdaten zur Übertragung an die Basisstationssteuerung BSC gemeinsam einer für die Signalisierung und Sprachcodierung/decodierung (Sprach-Codec) zuständigen Schnittstelle SS übergeben, während - im Fall der Mobilstation (FIGUR 6) - die Kontroll- und Signalisierungsdaten einer für die komplette Signalisierung und Steuerung der Mobilstation zuständigen Steuer- und Signalisiereinheit STSE und die Sprachdaten einem für die Spracheingabe und -ausgabe ausgelegten Sprach-Codec SPC übergeben werden.

In dem Sprach-Codec der Schnittstelle SS in der Basisstation BTS1, BTS2 werden die Sprachdaten in einem vorgegebenen Datenstrom (z.B. 64kbit/s-Strom in Netzrichtung bzw. 13kbit/s-Strom aus Netzrichtung).

In einer Steuereinheit STE wird die komplette Steuerung der Basisstation BTS1, BTS2 durchgeführt.

In der Abwärtsrichtung (Sendepfad) sendet die Basisstation BTS1, BTS2 über die Sendeantenne SAN beispielsweise mindestens eine Funknachricht FN mit einer Frequenz-/Zeit-/Code-Komponente an mindestens eine der Mobilstationen MS1...MS5, während die Mobilstation MS1...MS5 in der Aufwärtsrichtung (Sendepfad) über die gemeinsame Antenne ANT beispielsweise mindestens eine Funknachricht FN mit einer Frequenz-/Zeit-/Code-Komponente an mindestens einer Basisstation BTS1, BTS2 sendet.

Der Sendepfad beginnt bei der Basisstation BTS1, BTS2 in FIGUR 5 damit, daß in dem Kanal-Codec KC von der Basisstationssteuerung BSC über die Schnittstelle SS erhaltene Kontroll- und Signalisierungsdaten sowie Sprachdaten einem Kontroll- und Signalisierungszeitschlitz oder einem Sprachzeitschlitz zugewiesen werden und diese kanalweise in eine Bitsequenz codiert werden.

Der Sendepfad beginnt bei der Mobilstation MS1...MS5 in FIGUR 6 damit, daß in dem Kanal-Codec KC von dem Sprach-Codec SPC erhaltene Sprachdaten und von der Steuer- und Signalsiereinheit STSE erhaltene Kontroll- und Signalisierungsdaten einem Kontroll- und Signalisierungszeitschlitz oder einem Sprachzeitschlitz zugewiesen werden und diese kanalweise in eine Bitsequenz codiert werden.

Die in der Basisstation BTS1, BTS2 und in der Mobilstation MS1...MS5 gewonnene Bitsequenz wird jeweils in einem Datenzu-Symbol-Wandler DSW in Datensymbole umgewandelt. Im Anschluß daran werden jeweils die Datensymbole in einer Spreizinrichtung SPE mit einem jeweils teilnehmerindividuellen Code gespreizt. In dem Burstgenerator BG, bestehend aus einem Burstzusammensetzer BZS und einem Multiplexer MUX, wird danach in dem Burstzusammensetzer BZS jeweils den gespreizten Datensymbolen eine Trainingsinformationssequenz in Form einer Mitambel zur Kanalschätzung hinzugefügt und im Multiplexer MUX die auf diese Weise erhaltene Burstinformation auf den jeweils richtigen Zeitschlitz gesetzt. Abschließend wird der erhaltene Burst jeweils in einem Modulator MOD hochfrequent moduliert sowie digital/analog umgewandelt, bevor das auf diese Weise erhaltene Signal als Funknachricht FN über eine Funksendeeinrichtung FSE (Sender) an der Sendeantenne SAN bzw. der gemeinsamen Antenne ANT abgestrahlt wird.

TDD-Telekommunikationsysteme (**T**ime **D**ivision **D**uplex) sind Telekommunikationssysteme, bei denen der Übertragungszeitrahmen, bestehend aus mehreren Zeitschlitzen, für die Abwärtsübertragungsrichtung (Downlink) und die Aufwärtsübertragungsrichtung (Uplink) - vorzugsweise in der Mitte - geteilt ist.

Ein TDD-Telekommunikationssystem, das einen derartigen Übertragungszeitrahmen aufweist, ist z.B. das bekannte DECT-System [**D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16*]*.*

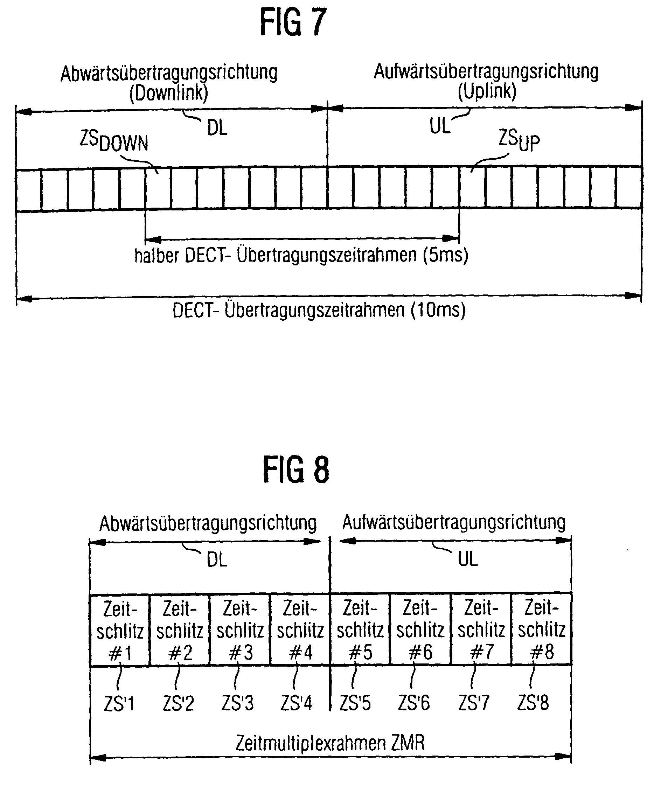

FIGUR 7 zeigt einen DECT-Übertragungszeitrahmen mit einer Zeitdauer von 10 ms, bestehend aus 12 "Downlink"-Zeitschlitzen und 12 "Uplink"-Zeitschlitzen. Für eine beliebige bidirektionale Telekommunikationsverbindung auf einer vorgegebenen Frequenz in Abwärtsübertragungsrichtung DL (Down Link) und Aufwärtsübertragungsrichtung UL (Up Link) wird gemäß dem DECT-Standard ein freies Zeitschlitzpaar mit einem "Downlink"-Zeitschlitz ZS_{DOWN} und einem "Uplink"-Zeitschlitz ZS_{UP} ausgewählt, bei dem der Abstand zwischen dem "Downlink"-Zeitschlitz ZS_{DOWN} und dem "Uplink"-Zeitschlitz Z3 obenfalls gemäß dem DECT-Standard die halbe Länge (5 ms) des DECT-Übertragungszeitrahmens beträgt.

Die der Erfindung zugrundeliegende Aufgabe besteht darin, in TDD-Telekommunikationssystemen mit drahtloser, auf Codeund Zeitmultiplex basierender Telekommunikation zwischen mobilen und/oder stationären Sende-/Empfangsgeräten die Systemleistung (performance) und/oder die spektrale Effizienz (spectral efficiency) gegenüber bekannten TDD-Systemen zu verbessern.

Diese Aufgabe wird jeweils durch die Merkmale der Patentansprüche 1 bis 8 gelöst.

Die der Erfindung zugrundeliegende Idee besteht darin, daß bei TDD-Telekommunikationssystemen mit drahtloser, auf Code- und Zeitmultiplex basierender Telekommunikation zwischen mobilen und/oder stationären Sende-/Empfangsgeräten, in dem TDD-Modus für jede Telekommunikationsverbindung zwischen den mobilen und/oder stationären Sende-/Empfangsgeräten ein Zeitschlitzpaar von einer vorgegebenen Anzahl von Zeitschlitzen, ein "Downlink"-Zeitschlitz und ein "Uplink"-Zeitschlitz derart auswählbar ist, daß der Abstand zwischen dem "Downlink"-Zeitschlitz und dem "Uplink"-Zeitschlitz, die derselben Trägerfrequenz oder unterschiedlichen Trägerfrequenzen zugewiesen sind, ein Bruchteil der Länge eines Zeitmultiplexrahmens ist, wobei der Abstand fest oder variabel ist, die Performance und die spektrale Effizienz des TDD-Telekommunikationssystems gegenüber bekannten TDD-Systemen zum Teil (Ansprüche 1 und 3 bzw. Ansprüche 5 und 7) wesentlich verbessert ist.

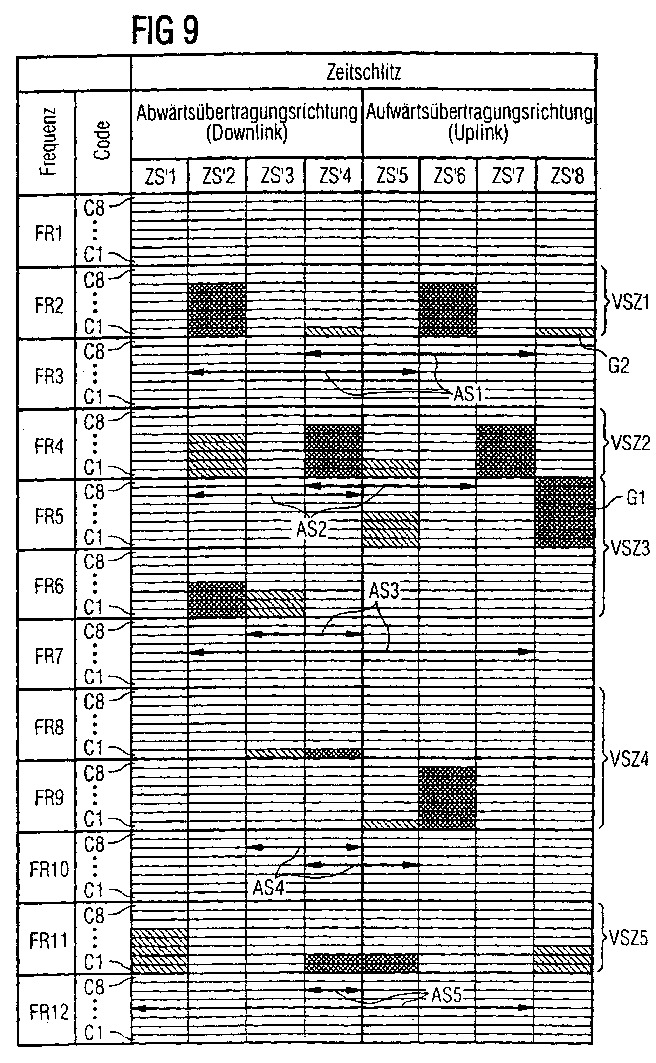

Vier Ausführungsbeispiele der Erfindung werden anhand der FIGUREN 8 und 9 erläutert. Diese zeigen:

FIGUR 8 ein gegenüber den Zeitrahmen in den FIGUREN 1 bis 3 und dem DECT-Übertragungszeitrahmen in FIGUR 7 in bezug auf die Zeitschlitzanzahl (modifizierten) TDD-Zeitmultiplexrahmen,

FIGUR 9 auf der Basis des Zeitmultiplexrahmens nach FIGUR 8 eine Kanalzuweisungstabelle für Kanäle mit einer Frequenz-, Code- und Zeitmultiplexkomponente

FIGUR 8 zeigt ausgehend von den Zeitrahmen in den FIGUREN 1 bis 3 und dem DECT-Übertragungszeitrahmen in FIGUR 7 einen (modifizierten) TDD-Zeitmultiplexrahmen ZMR mit acht Zeitschlitzen ZS'1...ZS'8, wobei die ersten vier Zeitschlitze ZS'1...ZS'4 für die Abwärtsübertragungsrichtung DL und die zweiten vier Zeitschlitzen ZS'5...ZS'8 für die Aufwärtsübertragungsrichtung UL vorgesehen sind. Die Anzahl der Zeitschlitze ist von "16" gemäß den FIGUREN 1 und 3 auf "8" lediglich aus Darstellungsgründen für die Kanalzuweisungstabelle in FIGUR 9 verringert worden und hat keinen beschränkenden, limitierenden Einfluß auf die Erfindung. Im Gegenteil - die Anzahl der Zeitschlitze kann - wie die anderen physikalischen Ressourcen (z.B. Code, Frequenz, etc.) - vielmehr je nach Telekommunikationssystem beliebig variiert werden.

FIGUR 9 zeigt auf der Basis des Zeitmultiplexrahmens nach FIGUR 8 eine Kanalzuweisungstabelle für Kanäle mit einer Frequenz-, Code- und Zeitmultiplexkomponente. Die Zeitmultiplexkomponente dieser Tabelle umfaßt die Zeitschlitze ZS'1...ZS'8 mit der TDD-Einteilung gemäß FIGUR 8. Die Frequenzmultiplexkomponente umfaßt 12 Frequenzen FR1...FR12, während die Codemultiplexkomponente 8 Codes (Pseudo-Zufallssignale) C1...C8 enthält.

In der FIGUR 9 sind für verschiedene Verbindungsszenarien, einem ersten Verbindungsszenario VSZ1, einem zweiten Verbindungsszenario VSZ2 (erstes Ausfuhrungsbeispiel), einem dritten Verbindunqsszenario VSZ3 (zweites Ausführungsbeispiel), einem vierten Verbindungsszenario VSZ4 (drittes Ausführungsbeispiel) und einem fünften Verbindungsszenario VSZ5 (viertes Ausführungsbeispiel), jeweils mehrere bidirektionale TDD-Telekommunikationsverbindungen, für die jeweils die physikalische Ressource "Code, Frequenz, Zeit" in Ab- und Aufwärtsübertragungsrichtung teilweise gleich und teilweise ungleich belegt ist. Zu jedem Verbindungsszenario VSZ1...VSZ5 gehört z.B. eine erste Gruppe von Telekommunikationsverbindungen G1, die mit einer aufsteigenden und abfallenden Schraffur markiert ist, und eine zweite Gruppe von Telekommunikationsverbindungen G2, die mit einer abfallenden Schraffur markiert ist. Jede Gruppe enthält dabei mindestens eine bidirektionale Telekommunikationsverbindung.

In dem ersten Verbindungsszenario VSZl belegt die erste Gruppe von Telekommunikationsverbindungen G1 auf einer zweiten Frequenz FR2 in Abwärtsübertragungsrichtung in einem zweiten Zeitschlitz ZS'2 sechs Codes - einen ersten Code C1, einen zweiten Code C2, einen dritten Code C3, einen vierten Code C4, einen fünften Code C5 und einen sechsten Code C6 - und in Aufwärtsübertragungsrichtung in einem sechsten Zeitschlitz ZS'6 wieder die sechs Codes C1...C6, während die zweite Gruppe von Telekommunikationsverbindungen G2 auf der zweiten Frequenz FR2 in Abwärtsübertragungsrichtung in einem vierten Zeitschlitz ZS'4 den ersten Code C1 und in Aufwärtsübertragungsrichtung in einem achten Zeitschlitz ZS'8 wieder den ersten Code C1 belegt.

Der vierte Zeitschlitz ZS'4 und der zweite Zeitschlitz ZS'2 sind "Downlink"-Zeitschlitze ZS_{DOWN}, während der sechste Zeitschlitz ZS'6 und der achte Zeitschlitz ZS'8 "Uplink"-Zeitschlitze ZS_{UP} sind.

Für jede Telekommunikationsverbindung in den Gruppen G1, G2 ist ein erster Abstand AS1 zwischen dem "Downlink"-Zeitschlitz ZS_{DOWN} und dem "Uplink"-Zeitschlitz ZS_{UP} - gemäß dem Stand der Technik (vgl. FIGUR 7) - so lang, wie der halbe Zeitmultiplexrahmen ZMR. Der Abstand AS1 ist somit ein Bruchteil der Länge des Zeitmultiplexrahmens ZMR, wobei der Bruchteil den Wert 0,5 hat.

In dem zweiten Verbindungsszenario VSZ2 belegt die erste Gruppe von Telekommunikationsverbindungen G1 auf einer vierten Frequenz FR4 in Abwärtsübertragungsrichtung in dem vierten Zeitschlitz ZS'4 die sechs Codes C1...C6 und in Aufwärtsübertragungsrichtung in einem siebten Zeitschlitz ZS'6 wieder die sechs Codes C1...C6, während die zweite Gruppe von Telekommunikationsverbindungen G2 auf der vierten Frequenz FR4 in Abwärtsübertragungsrichtung in einem zweiten Zeitschlitz ZS'2 die Codes C1...C4 und in Aufwärtsübertragungsrichtung in einem fünften Zeitschlitz ZS'5 den ersten Code C1 und den zweiten Code C2 belegt.

Der vierte Zeitschlitz ZS'4 und der zweite Zeitschlitz ZS'2 sind - wie beim ersten Verbindungsszenario VSZ1 - "Downlink"-Zeitschlitze ZS_{DOWN}, während der siebte Zeitschlitz ZS'7 und der fünfte Zeitschlitz ZS'5 "Uplink"-Zeitschlitze ZS_{UP} sind.

Für jede Telekommunikationsverbindung in den Gruppen G1, G2 ist ein zweiter Abstand AS2 zwischen dem "Downlink"-Zeitschlitz ZS_{DOWN} und dem "Uplink"-Zeitschlitz ZS_{UP} so lang, wie ein Bruchteil (fractional distance) der Länge des Zeitmultiplexrahmens ZMR, wobei der Bruchteil so bemessen und größer oder kleiner als der Wert 0,5 ist, daß der zweite Abstand AS2 fest ist.

In dem dritten Verbindungsszenario VSZ3 belegt die erste Gruppe von Telekommunikationsverbindungen G1 in Abwärtsübertragungsrichtung auf einer sechsten Frequenz FR6 in dem zweiten Zeitschlitz ZS'2 die vier Codes C1...C4 und in Aufwärtsübertragungsrichtung auf einer fünften Frequenz FR5 in dem achten Zeitschlitz ZS'8 die sechs Codes C1...C6 sowie einen siebten Code C7 und einen achten Code C8, während die zweite Gruppe von Telekommunikationsverbindungen G2 in Abwärtsübertragungsrichtung auf der sechsten Frequenz FR6 in einem dritten Zeitschlitz ZS'3 die Codes C1...C3 und in Aufwärtsübertragungsrichtung auf der fünften Frequenz FR5 in dem fünften Zeitschlitz ZS'5 die Codes C1...C4 belegt.

Der zweite Zeitschlitz ZS'2 und der dritte Zeitschlitz ZS'3 sind "Downlink"-Zeitschlitze ZS_{DOWN}, während der achte Zeitschlitz ZS'8 und der fünfte Zeitschlitz ZS'5 "Uplink"-Zeitschlitze ZS_{UP} sind.

Für jede Telekommunikationsverbindung in den Gruppen G1, G2 beträgt ein dritter Abstand AS3 zwischen dem "Downlink"-Zeitschlitz ZS_{DOWN} und dem "Uplink"-Zeitschlitz ZS_{UP} ein Bruchteil (fractional distance) der Länge des Zeitmultiplexrahmens ZMR, wobei der Bruchteil jeweils so bemessen ist, daß der dritte Abstand AS3 variabel ist.

In dem vierten Verbindungsszenario VSZ4 belegt die erste Gruppe von Telekommunikationsverbindungen G1 in Abwärtsübertragungsrichtung auf einer achten Frequenz FR8 in dem viertten Zeitschlitz ZS'4 den ersten Code C1 und in Aufwärtsübertragungsrichtung auf einer neunten Frequenz FR9 in dem sechsten Zeitschlitz ZS'6 die sieben Codes C1...C7, während die zweite Gruppe von Telekommunikationsverbindungen G2 in Abwärtsübertragungsrichtung auf der achten Frequenz FR8 in dem dritten Zeitschlitz ZS'3 den ersten Code C1 und in Aufwärtsübertragungsrichtung auf der neunten Frequenz FR9 in dem fünften Zeitschlitz ZS'5 den ersten Code C1 belegt.

Der vierte Zeitschlitz ZS'4 und der dritte Zeitschlitz ZS'3 sind "Downlink"-Zeitschlitze ZS_{DOWN}, während der sechste Zeitschlitz ZS'6 und der fünfte Zeitschlitz ZS'5 "Uplink"-Zeitschlitze ZS_{UP} sind.

Für jede Telekommunikationsverbindung in den Gruppen G1, G2 beträgt ein vierter Abstand AS4 zwischen dem "Downlink"-Zeitschlitz ZS_{DOWN} und dem "Uplink"-Zeitschlitz ZS_{UP} ein Bruchteil (fractional distance) der Länge des Zeitmultiplexrahmens ZMR, wobei der Bruchteil jeweils so bemessen ist, daß der vierte Abstand AS4 fest ist.

In dem fünften Verbindungsszenario VSZ5 belegt die erste Gruppe von Telekommunikationsverbindungen G1 auf einer elften Frequenz FR11 in Abwärtsübertragungsrichtung in dem vierten Zeitschlitz ZS'4 den ersten Code C1 und den zweiten Code C2 und in Aufwärtsübertragungsrichtung in dem fünften Zeitschlitz ZS'5 wieder den ersten Code C1 und den zweiten Code C2, während die zweite Gruppe von Telekommunikationsverbindungen G2 auf der elften Frequenz FR11 in Abwärtsübertragungsrichtung in einem ersten Zeitschlitz ZS'1 die Codes C1...C5 und in Aufwärtsübertragungsrichtung in dem achten Zeitschlitz ZS`8 die Codes C1...C3 belegt.

Der vierte Zeitschlitz ZS'4 und der erste Zeitschlitz ZS'1 sind "Downlink"-Zeitschlitze ZS_{DOWN}, während der fünfte Zeitschlitz ZS`5 und der achte Zeitschlitz ZS`8 "Uplink"-Zeitschlitze ZS_{UP} sind.

Für jede Telekommunikationsverbindung in den Gruppen G1, G2 ist ein fünfter Abstand AS5 zwischen dem "Downlink"-Zeitschlitz ZS_{DOWN} und dem "Uplink"-Zeitschlitz ZS_{UP} so lang, wie ein Bruchteil (fractional distance) der Länge des Zeitmultiplexrahmens ZMR, wobei der Bruchteil so bemessen, daß der fünfte Abstand AS5 variabel ist.

## Patentansprüche

1. Luftschnittstelle für TDD-Telekommunikationssysteme mit drahtloser, auf Code- und Zeitmultiplex basierender Telekommunikation zwischen mobilen und/oder stationären Sende-/Empfangsgeräten mit folgenden Merkmalen:
(a) für das Telekommunikationssystem vorgegebene Trägerfrequenzen (FR1...FR12) sind jeweils in einer Anzahl von Zeitschlitzen (ZS'1...ZS'8) mit jeweils einer vorgegebenen Zeitschlitzdauer (T_{ZS}) derart unterteilt, daß das Telekommunikationssystem im TDD-Modus betreibbar ist, wobei die Zeitschlitze (ZS'1...ZS'8) pro Trägerfrequenz (FR1...FR12) jeweils einen Zeitmultiplexrahmen (ZMR) bilden,
(b) in den Zeitschlitzen (ZS'1...ZS'8) bzw. den Frequenzbereichen des Telekommunikationssystems sind höchstens eine vorgegebene Anzahl von bidirektionalen Telekommunikationsverbindungen in Auf- und Abwärtsrichtung zwischen Telekommunikationsteilnehmern der mobilen Sende-/Empfangsgeräten (MS1...MS5) und/oder stationären Sende-/Empfangsgeräten (BTS1, BTS2) des Telekommunikationssystems gleichzeitig herstellbar, wobei dabei übertragene Teilnehmersignale zur Separierbarkeit mit den Teilnehmern individuell zugeordneten Pseudo-Zufallssignalen (C1...C8), den sogenannten Codes, verknüpft sind, dadurch gekennzeichet daß
(c) in dem TDD-Modus ist für jede Telekommunkationsverbindung ein Zeitschlitzpaar, ein "Downlink"-Zeitschlitz (ZS'_{DOWN}) und ein "Uplink"-Zeitschlitz (ZS'_{UP}) derart auswählbar, daß ein Abstand (AS5, AS2, AS3, AS4) zwischen dem "Downlink"-Zeitschlitz (ZS'_{DOWN}) und dem "Uplink"-Zeitschlitz (ZS'_{UP}), die derselben Trägerfrequenz (FR1...FR12) zugewiesen sind, ein Bruchteil der Länge des Zeitmultiplexrahmens (ZMR) ist und variabel ist oder ein Bruchteil der Länge des Zeitmultiplexrahmens (ZMR) ist und fest ist, wobei der Bruchteil größer oder kleiner als der Wert "0,5" ist oder die unterschiedlichen Trägerfrequenzen (FR1...FR12) zugewiesen sind, ein Bruchteil der Länge des Zeitmultiplexrahmens (ZMR) ist und variabel ist oder ein Bruchteil der Länge des Zeitmultipiexrahmens (ZMR) ist und fest ist.

2. Verfahren zum Steuern von Telekommunikationsverbindungen in TDD-Telekommunikationssysteme mit drahtloser, auf Codeund Zeitmultiplex basierender Telekommunikation zwischen mobilen und/oder stationären Sende-/Empfangsgeräten, wobei
(a) für das Telekommunikationssystem vorgegebene Trägerfrequenzen (FR1...FR12) jeweils in einer Anzahl von Zeitschlitzen (ZS'1...ZS'8) mit jeweils einer vorgegebenen Zeitschlitzdauer (T_{ZS}) derart unterteilt werden, daß das Telekommunikationssystem im TDD-Modus betrieben wird, wobei die Zeitschlitze (ZS'1...ZS'8) pro Trägerfrequenz (FR1...FR12) jeweils einen Zeitmultiplexrahmen (ZMR) bilden,
(b) in den Zeitschlitzen (ZS'1...ZS'8) bzw. den Frequenzbereichen des Telekommunikationssystems höchstens eine vorgegebene Anzahl von bidirektionalen Telekommunikationsverbindungen in Auf- und Abwärtsrichtung zwischen Telekommunikationsteilnehmern der mobilen Sende-/Empfangsgeräten (MS1...MS5) und/oder stationären Sende-/Empfangsgeräten (BTS1, BTS2) des Telekommunikationssystems gleichzeitig hergestellt werden, wobei dabei übertragene Teilnehmersignale zur Separierbarkeit mit den Teilnehmern individuell zugeordneten Pseudo-Zufallssignalen (C1...C8), den sogenannten Codes, verknüpft werden,
**dadurch gekennzeichnet, daß**
in dem TDD-Modus für jede Telekommunkationsverbindung ein Zeitschlitzpaar, ein "Downlink"-Zeitschlitz (ZS'_{DOWN}) und ein "Uplink"-Zeitschlitz (ZS'_{UP}) derart ausgewählt wird, daß ein Abstand (AS5,AS2, AS3, AS4) zwischen dem "Downlink"-Zeitschlitz (ZS'_{DOWN}) und dem "Uplink"-Zeitschlitz (ZS'_{UP}), die derselben Trägerfrequenz (FR1...FR12) zugewiesen sind, ein Bruchteil der Länge des Zeitmultiplexrahmens (ZMR) ist und variabel ist oder ein Bruchteil der Länge des Zeitmultipiexrahmens (ZMR) ist und fest ist, wobei der Bruchteil größer oder kleiner als der Wert "0,5" ist oder die unterschiedlichen Trägerfrequenzen (FR1...FR12) zugewiesen sind, ein Bruchteil der Länge des Zeitmultiplexrahmens (ZMR) ist und variabel ist oder ein Bruchteil der Länge des Zeitmultiplexrahmens (ZMR) ist und fest ist.

## Claims

1. Air interface for TDD telecommunications systems using wire-free telecommunication, based on code-division multiplexing and time-division multiplexing, between mobile and/or stationary transmitting/receiving appliances, having the following features:
(a) carrier frequencies (FR1...FR12) which are predetermined for the telecommunications system are in each case subdivided into a number of timeslots (ZS'1...ZS'8) which each have a predetermined time slot duration (T_{ZS}) in such a way that the telecommunications system can be operated in the TDD mode, with the time slots (ZS'1...ZS'8) for each carrier frequency (FR1...FR12) in each case forming a time-division multiplex frame (ZMR),
(b) at most a predetermined number of bidirectional telecommunications links can be set up at the same time in the uplink direction and downlink direction between telecommunications subscribers of the mobile transmitting/receiving appliances (MS1...MS5) and/or stationary transmitting /receiving appliances (BTS1, BTS2) in the telecommunications system in the time slots (ZS'1...ZS'8) or frequency bands of the telecommunications system, with subscriber signals which are transmitted in this case being linked for separability to pseudo-random signals (C1...C8), the so-called codes, which are associated individually with the subscribers,
**characterized in that**
(c) a downlink time slot (ZS'_{DOWN}) and an uplink time slot (ZS'_{UP}), forming a pair of time slots, can be chosen for each telecommunications link in the TDD mode, in such a way that a separation (AS5, AS2, AS3, AS4) between the downlink time slot (ZS'_{DOWN}) and the uplink time slot (ZS'_{UP}), which are assigned to the same carrier frequency (FR1...FR12, is a fraction of the length of the time-division multiplex frame (ZMR) and is variable, or is a fraction of the length of the time-division multiplex frame (ZMR) and is fixed, with the fraction being greater or less than the value "0.5", or, if they are assigned to different carrier frequencies (FR1...FR12), is a fraction of the length of the time-division multiplex frame (ZMR) and is variable, or is a fraction of the length of the time-division multiplex frame (ZMR) and is fixed.

2. Method for controlling telecommunications links in TDD telecommunications systems with wire-free telecommunication, based on code-division multiplexing and time-division multiplexing, between mobile and/or stationary transmitting/receiving appliances, in which case:
(a) carrier frequencies (FR1...FR12) which are predetermined for the telecommunications system are in each case subdivided into a number of time slots (ZS'1...ZS'8) which each have a predetermined time slot duration (T_{ZS}) in such a way that the telecommunications system is operated in the TDD mode, with the time slots (ZS'1...ZS'8) for each carrier frequency (FR1...FR12) in each case forming a time-division multiplex frame (ZMR),
(b) at most a predetermined number of bidirectional telecommunications links are set up at the same time in the uplink direction and downlink direction between telecommunications subscribers of the mobile transmitting/receiving appliances (MS1...MS5) and/or stationary transmitting /receiving appliances (BTS1, BTS2) in the telecommunications system in the time slots (ZS`1...ZS`8) or frequency bands of the telecommunications system, with subscriber signals which are transmitted in this case being linked for separability to pseudorandom signals (C1...C8), the so-called codes, which are associated individually with the subscribers,
**characterized in that**
a downlink time slot (ZS'_{DOWN}) and an uplink time slot (ZS'_{UP}), forming a pair of time slots, are chosen for each telecommunications link in the TDD mode, in such a way that a separation (AS5, AS2, AS3, AS4) between the downlink time slot (ZS'_{DOWN}) and the uplink time slot (ZS'_{UP}), which are assigned to the same carrier frequency (FR1...FR12), is a fraction of the length of the time-division multiplex frame (ZMR) and is variable, or is a fraction of the length of the time-division multiplex frame (ZMR) and is fixed, with the fraction being greater or less than the value "0.5", or, if they are assigned to different carrier frequencies (FR1...FR12), is a fraction of the length of the time-division multiplex frame (ZMR) and is variable, or is a fraction of the length of the time-division multiplex frame (ZMR) and is fixed.

## Revendications

1. Interface radio pour systèmes de télécommunication TDD à télécommunication sans fil fondée sur le code et le multiplexage dans le temps entre des appareils émetteurs et récepteurs mobiles et/ou stationnaires possédant les caractéristiques suivantes :
a) pour le système de télécommunication, des fréquences porteuses prédéfinies (FR1...FR12) sont réparties respectivement en un nombre d'intervalles temporels (ZS'1...ZS'8) dotés respectivement d'une durée d'intervalle (T_{ZS}) prédéfinie de telle manière que le système de télécommunication est exploitable en mode TDD, les intervalles temporels (ZS'1...ZS'8) formant respectivement un cadre de multiplexage de temps (ZMR) par fréquence porteuse (FR1...FR12),
b) dans les intervalles temporels (ZS'1...ZS'8) resp. les zones de fréquence du système de télécommunication, un nombre prédéfini maximum de liaisons de télécommunications bidirectionnelles peut être produit simultanément en montée et en descente entre les abonnés de la télécommunication des appareils émetteurs/récepteurs mobiles (MS1...MS5) et/ou les appareils émetteurs/récepteurs stationnaires (BTS1...BTS2) du système de télécommunication, les signaux des abonnés transmis étant enchaînés à la séparabilité des signaux pseudo aléatoires (C1...C8) attribués individuellement aux abonnés, les codes susmentionnés **caractérisés en ce que**
c) une paire d'intervalles temporels, un intervalle temporel « downlink »/liaison descendante (ZS'_{DOWN}) et un intervalle temporel « uplink »/liaison montante (ZS'_{UP}) peut être sélectionné pour chaque liaison de télécommunication en mode TDD, de telle sorte qu'un écart (AS5, AS2, AS3, AS4) entre l'intervalle temporel « downlink »/liaison descendante (ZS'_{DOWN}) et l'intervalle temporel « uplink »/liaison montante (ZS'_{UP}) qui sont assignés aux mêmes fréquences porteuses (FR1...FR12), est une fraction de la longueur du cadre de multiplexage de temps (ZMR) et est variable, ou est une fraction de la longueur du cadre de multiplexage de temps (ZMR) et est fixe, la fraction étant supérieure ou inférieure à la valeur « 0,5 » ou les différentes fréquences porteuses (FR1...FR12) étant assignées, est une fraction de la longueur du cadre de multiplexage de temps (ZMR) et est variable ou est une fraction de la longueur du cadre de multiplexage de temps (ZMR) et est fixe.

2. Procédé pour commander des liaisons de télécommunication dans des systèmes de télécommunication TDD à télécommunication sans fil fondée sur le code et le multiplexage dans le temps entre des appareils émetteurs et récepteurs mobiles et/ou stationnaires, où :
a) pour le système de télécommunication, des fréquences porteuses prédéfinies (FR1...FR12) sont réparties respectivement en un nombre d'intervalles temporels (ZS'1...ZS'8) dotés respectivement d'une durée d'intervalle (T_{ZS}) prédéfinie de telle manière que le système de télécommunication est exploité en mode TDD, les intervalles temporels (ZS'1...ZS'8) formant respectivement un cadre de multiplexage de temps (ZMR) par fréquence porteuse (FR1...FR12),
b) dans les intervalles temporels (ZS'1...ZS'8) resp. les zones de fréquence du système de télécommunication, un nombre prédéfini maximum de liaisons de télécommunications bidirectionnelles est produit simultanément en montée et en descente entre les abonnés de la télécommunication des appareils émetteurs/récepteurs mobiles (MS1...MS5) et/ou les appareils émetteurs/récepteurs stationnaires (BTS1...BTS2) du système de télécommunication, les signaux des abonnés transmis sont enchaînés à la séparabilité des signaux pseudo aléatoires (C1...C8) attribués individuellement aux abonnés, les codes susmentionnés **caractérisés en ce que**
une paire d'intervalles temporels, un intervalle temporel « downlink »/liaison descendante (ZS'_{DOWN}) et un intervalle temporel « uplink »/liaison montante (ZS'_{UP}) peut être sélectionné pour chaque liaison de télécommunication en mode TDD, de telle sorte qu'un écart (AS5, AS2, AS3, AS4) entre l'intervalle temporel « downlink »/liaison descendante (ZS'_{DOWN}) et l'intervalle temporel « uplink »/liaison montante (ZS'_{UP}) qui sont assignés aux mêmes fréquences porteuses (FR1...FR12), est une fraction de la longueur du cadre de multiplexage de temps (ZMR) et est variable, ou est une fraction de la longueur du cadre de multiplexage de temps (ZMR) et est fixe, la fraction étant supérieure ou inférieure à la valeur « 0,5 » ou les différentes fréquences porteuses (FR1...FR12) étant assignées, est une fraction de la longueur du cadre de multiplexage de temps (ZMR) et est variable ou est une fraction de la longueur du cadre de multiplexage de temps (ZMR) et est fixe.
